# FASCICULE DE BREVET EUROPEEN

(11) **EP 2 197 700 B1**
(45) Date de publication et mention de la délivrance du brevet: **03.10.2012**
(21) Numéro de dépôt: 08868469.1
(22) Date de dépôt: 07.10.2008
(51) Int. Cl.: B60K 6/543, B60K 6/383, B60K 6/387, B60K 6/48

(54) **SYSTÈME D'ENTRAÎNEMENT EN DÉPLACEMENT AVEC CHEMINS DE TRANSMISSIONS MULTIPLES POUR VÉHICULE HYBRIDE ET PROCÉDÉ POUR L'ENTRAÎNEMENT EN DÉPLACEMENT DE CE VÉHICULE**
ANTRIEBSSYSTEM MIT MEHREREN TRANSMISSIONSSPUREN FÜR EIN HYBRIDFAHRZEUG UND VERFAHREN ZUM ANTREIBEN DIESES FAHRZEUGS
PROPULSION SYSTEM WITH MULTIPLE TRANSMISSION TRACKS FOR HYBRID VEHICLE AND METHOD OF PROPELLING THIS VEHICLE

(30) Priorité: 10.10.2007 FR 0707118
(43) Date de publication de la demande: 23.06.2010
(73) Titulaire: IFP Energies nouvelles, 92852 Rueil-Malmaison Cedex (FR)
(72) Inventeur: VENTURI, Stéphane, F-07100 Roiffieux (FR)
(86) Numéro de dépôt international: PCT/FR2008/001399
(87) Numéro de publication internationale: WO 2009/083661

(56) Documents cités:
- WO-A-03/026911
- WO-A-2006/043812
- DE-A1- 19 915 370
- FR-A- 2 811 395
- US-A1- 2006 247 086

## Description

La présente invention se rapporte à un système d'entraînement, en déplacement par traction ou propulsion, de véhicules de type hybride.

Généralement, ce type de véhicules combine un moteur thermique, principalement à combustion interne, et une machine électrique reliée à une source électrique, telle que un ou plusieurs accumulateurs électriques, pour réaliser leurs propulsions. Cette combinaison permet d'optimiser le rendement énergétique du système d'entraînement tout en diminuant la consommation totale en carburant et en limitant le rejet de polluants.

Dans l'exemple décrit dans le document FR 2 670 440, le moteur thermique comprend un arbre de sortie qui entraîne la partie motrice d'une transmission variable, comme un variateur de vitesse, et dont la partie réceptrice de cette transmission est reliée à l'essieu moteur du véhicule. L'arbre de sortie porte, entre le moteur thermique et le variateur de vitesse, une machine électrique reliée à une batterie électrique et deux embrayages, un premier embrayage entre le moteur thermique et la machine électrique et un deuxième embrayage entre la machine électrique et le variateur de vitesse.

Lorsque l'on souhaite entraîner en déplacement le véhicule avec un couple important disponible sur une grande plage de vitesses tout en limitant les émissions de gaz d'échappement et la génération de bruit, comme dans un site urbain, l'utilisation de la machine électrique est privilégiée pour entraîner l'essieu moteur du véhicule et par conséquent les roues motrices de ce véhicule.

Par contre, pour des utilisations où une puissance d'entraînement élevée et une grande autonomie de fonctionnement sont demandées, le moteur thermique est utilisé pour entraîner l'essieu moteur et assurer ainsi le déplacement du véhicule.

Ce système d'entraînement bien que donnant satisfaction présente néanmoins des inconvénients non négligeables.

En effet, lorsque seule la machine électrique est utilisée pour entraîner le véhicule, celle-ci doit posséder un couple et/ou une puissance suffisants non seulement pour entraîner le véhicule mais aussi pour vaincre toutes les résistances (inertie, frottement, ...) que possède la transmission variable. En outre, lors des opérations de freinage du véhicule, une partie de l'énergie dégagée par ce freinage est absorbée par le variateur de vitesse et seule une autre partie de cette énergie est récupérée puis transformée par la machine électrique.

Dans le cas de l'utilisation d'une boîte de vitesse mécanique en lieu et place du variateur, il est essentiel, pour récupérer l'énergie de freinage, de changer de rapport de boîte. Pour ce faire, il est nécessaire de désaccoupler l'essieu moteur, ce qui entraîne une rupture de transmission de mouvement et une interruption de la récupération d'énergie de freinage.

Il est également connu par US 2006/247086, WO 2006/043812, WO 03/026911 ou FR 2 811 395 un système d'entraînement pour véhicule hybride avec un moteur thermique, un arbre de moteur thermique, une machine électrique avec un rotor alimentée par des batteries, un accouplement débrayable entre l'arbre et le rotor, un arbre mené entraînant les roues du véhicule, et une première voie de transmission de mouvement entre l'arbre du moteur thermique et l'arbre mené et une seconde voie de transmission de mouvement entre le rotor et l'arbre mené.

Ces systèmes ont pour inconvénients majeurs de nécessiter des dispositifs complexes et difficiles à contrôler pour assurer la liaison cinématique avec l'arbre mené.

La présente invention se propose de remédier aux inconvénients ci-dessus mentionnés grâce à un système d'entraînement simple et ne nécessitant pas de dispositifs de commande compliqués pour assurer les différentes utilisations de ce système.

A cet effet, l'invention concerne un système d'entraînement en déplacement pour véhicule hybride comprenant un moteur thermique, notamment à combustion interne, avec un arbre, au moins une machine électrique avec un rotor alimentée par des batteries, un accouplement débrayable entre ledit arbre et ledit rotor, un arbre mené entraînant les roues du véhicule, une première voie de transmission de mouvement entre l'arbre du moteur thermique et l'arbre mené et une seconde voie de transmission de mouvement entre le rotor et ledit arbre mené, caractérisé en ce qu'il comprend au moins un accouplement centrifuge entre l'arbre mené et la première voie de transmission.

Au moins une des voies peut comprendre une transmission de rapport variable.

La transmission peut comprendre une transmission de rapport continûment variable.

La transmission de rapport continûment variable peut comprendre deux paires de poulies à écartement variable reliées par une courroie.

Alternativement, la transmission de rapport variable peut comprendre une boîte de vitesse.

Au moins une des voies peut comprendre une transmission de rapport fixe.

La transmission de rapport fixe peut comprendre deux poulies reliées par une courroie.

Le système peut comprendre un accouplement débrayable entre le rotor de la machine électrique et la seconde voie de transmission.

Le système peut comprendre un accouplement entre la première voie de transmission et l'arbre du moteur.

L'accouplement peut comprendre un accouplement unidirectionnel.

L'accouplement peut comprendre un accouplement débrayable.

Le système peut comprendre une machine électrique additionnelle entraînée par le moteur.

L'invention concerne également un procédé pour l'entraînement en déplacement d'un véhicule hybride comprenant un moteur thermique, notamment à combustion interne, avec un arbre, au moins une machine électrique avec un rotor alimentée par des batteries, un accouplement débrayable entre ledit arbre et ledit rotor, et un arbre mené entraînant les roues du véhicule, procédé selon lequel l'arbre mené est relié par une première voie de transmission de mouvement avec l'arbre du moteur thermique et/ou par une seconde voie de transmission de mouvement avec le rotor de la machine électrique, caractérisé en ce qu'il consiste à réaliser l'entraînement de l'arbre mené par un accouplement centrifuge entre ledit arbre et la première voie de transmission

Le procédé peut consister, pour réaliser le démarrage du moteur thermique, à alimenter la machine électrique par les batteries pour la faire fonctionner comme un démarreur électrique et à relier le rotor de cette machine avec l'arbre du moteur par l'accouplement.

Le procédé peut consister, conjointement au fonctionnement du moteur thermique et à l'entraînement de l'arbre mené par la première voie de transmission, à réaliser la charge des batteries grâce à la mise en action de la machine électrique par l'accouplement entre l'arbre du moteur et le rotor de la machine.

Le procédé peut consister, conjointement au fonctionnement du moteur thermique et à l'entraînement de l'arbre mené par la première voie de transmission, à entraîner ledit arbre mené par la machine électrique grâce à la seconde voie de transmission.

Le procédé peut consister, conjointement au fonctionnement du moteur thermique et à l'entraînement de l'arbre mené par la deuxième voie de transmission, à entraîner ledit arbre mené par le moteur thermique en reliant son arbre au rotor par l'accouplement.

Le procédé peut consister, lors des phases de décélération du véhicule, à récupérer l'énergie mécanique de l'arbre mené pour la transmettre au rotor de la machine électrique en reliant ledit rotor à la deuxième voie de transmission par l'accouplement.

Le procédé peut consister, lors des phases de décélération du véhicule, à récupérer l'énergie mécanique de l'arbre mené pour la transmettre au rotor de la machine électrique en reliant ledit rotor à la deuxième voie de transmission par l'accouplement et pour la transmettre à l'arbre du moteur en rendant opérationnel l'accouplement entre le rotor et l'arbre.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un système d'entraînement d'un véhicule hybride selon l'invention,
- les figures 2 à 14 qui montrent le système de la figure 1 allant d'une première configuration de fonctionnement à une treizième configuration et
- les figures 15 à 21 qui illustrent différentes variantes du système selon l'invention.

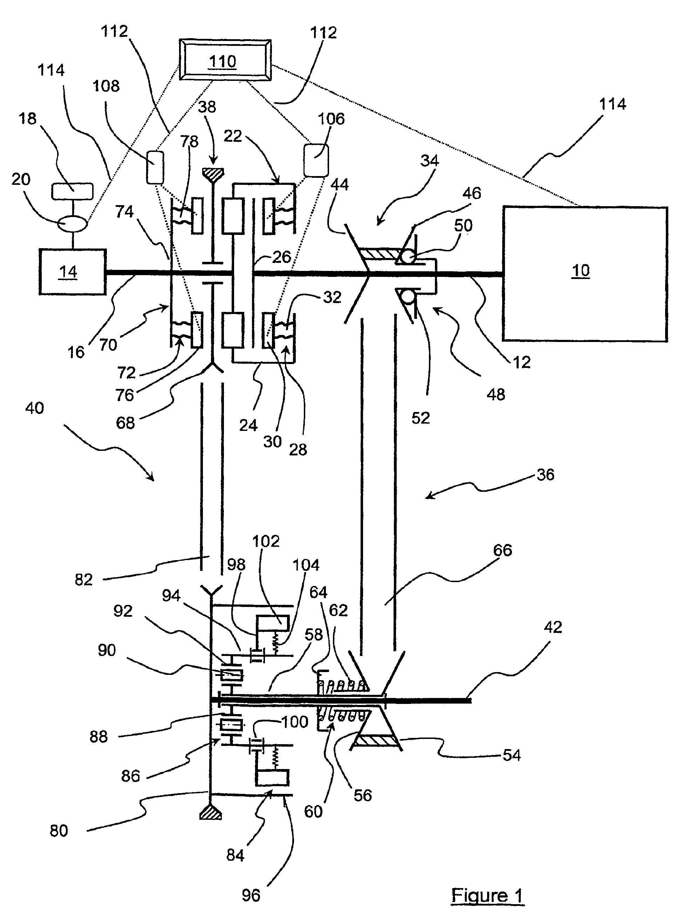

Comme illustré sur la figure 1, le système d'entraînement d'un véhicule hybride comprend un moteur thermique 10, notamment un moteur à combustion interne, avec un arbre 12 et une machine électrique 14, pouvant fonctionner en mode moteur électrique ou en mode génératrice d'énergie électrique, avec un rotor 16. Cette machine est alimentée par des accumulateurs électriques 18 (ou batteries) en étant contrôlée par un organe de commande 20.

L'arbre 12 du moteur thermique 10 et le rotor 16 de la machine électrique 14 sont reliés l'un à l'autre par un accouplement débrayable 22. Cet accouplement comprend un carter 24 porté par l'extrémité du rotor 16, de manière fixe en rotation et en translation par rapport à ce rotor. Cet accouplement comprend également un disque d'accouplement 26 logé dans le carter en étant porté par l'extrémité de l'arbre 12 de manière fixe en rotation et libre en translation axiale sur cet arbre. L'accouplement comporte aussi des moyens de pression 28, logés dans le carter 24, qui permettent d'assurer l'accouplement entre le disque et le carter de façon à autoriser la rotation simultanée du rotor et de l'arbre. A titre d'exemple, ces moyens de pression comportent un plateau de pression 30 soumis à l'action de moyens élastiques 32, généralement sous la forme de rondelle Belleville ou de ressorts à spires.

L'arbre 12 porte également, entre l'accouplement 22 et le moteur thermique 10, un élément 34 d'une première voie de transmission de mouvement 36, préférentiellement de rapport variable, alors que le rotor 16 porte, entre l'accouplement 22 et la machine électrique 14, un élément 38 d'une seconde voie de transmission de mouvement 40, avantageusement de rapport fixe.

Ces deux voies de transmission, de préférence placées parallèlement l'une à l'autre, sont prévues pour contrôler, de manière séparée ou de manière simultanée, un arbre mené 42 disposé avantageusement parallèlement à l'arbre et au rotor. Cet arbre mené est relié à un essieu moteur, directement ou par l'intermédiaire d'une transmission, comme un pont différentiel, en permettant d'entraîner les roues motrices du véhicule (non représentés).

Ces voies de transmission de mouvement permettent de transmettre à l'arbre mené non seulement tout mouvement de rotation du rotor et/ou de l'arbre mais aussi tout couple et/ou toute puissance généré(s) par cet arbre et/ou ce rotor.

La première voie de transmission de rapport variable, ici de rapport continûment variable, se présente sous la forme d'un variateur de vitesse avec des poulies variables. Ce variateur se compose généralement de deux paires de disques coniques opposés entraînées par une courroie trapézoïdale. La première paire de disques coniques opposés comprend un disque conique 44 porté de manière fixe en rotation et en translation sur l'arbre 12 et un autre disque 46 qui est mobile en étant monté fixe en rotation mais libre en translation sur cet arbre. Des moyens de commande en déplacement en translation 48 du disque conique 46 sont prévus pour pouvoir contrôler l'écartement entre ces deux disques coniques. Avantageusement et comme cela est largement connu, ces moyens sont des moyens centrifuges avec des masselottes 50 qui prennent appui, d'une part, sur un flasque 52, fixe en translation et en rotation, porté par l'arbre 12 en étant sensiblement perpendiculaire à cet arbre et, d'autre part, sur la face externe du disque conique mobile 46.

L'arbre mené 42 porte la seconde paire de disques coniques opposés 54, 56 qui est disposée en regard de la première paire de disques 44, 46. Le disque conique 54, en vis-à-vis du disque conique 46, est monté fixement sur un fourreau 58 coaxial à l'arbre mené 42, ce fourreau étant libre en rotation par rapport à cet arbre mais fixe en translation par rapport à celui-ci. L'autre disque conique 56, en regard du disque conique 44, est fixe en rotation par rapport au disque 54 mais mobile en translation sur le fourreau 58 sous l'action de moyens élastiques 60. Ces moyens élastiques sont ici sous la forme d'un ressort 62 s'appuyant sur la face externe du disque conique 56 et sur une plaque 64 orthogonale au fourreau 58.

Les deux paires de disques coniques sont reliées cinétiquement l'une à l'autre par une courroie trapézoïde 66, ou tout autre moyen équivalent.

Ainsi toute variation d'écartement des disques niveau de la première paire de disques coniques 44, 46, sous l'impulsion des moyens de commande 48, se répercute par une variation de l'écartement des disques coniques 54, 56 sous l'effet conjoint des moyens élastiques et du déplacement en translation de la courroie 66 dans une direction orthogonale aux arbres 12 et 42. De ce fait, l'arbre mené 42 subit une variation de vitesse qui est dépendante de l'écartement des disques coniques.

L'autre voie de transmission, préférentiellement à rapport fixe, comprend une poulie 68, de préférence crantée, montée folle sur le rotor 16 mais qui peut être reliée en rotation à ce rotor sous l'effet d'un accouplement débrayable 70. Pour ce faire, la poulie est située entre le carter 24 de l'accouplement 22 et des moyens de pression 72 portés par un flasque 74 fixement relié à l'arbre 16.

Les moyens de pression 72 sont avantageusement semblables à ceux décrits précédemment avec un plateau de pression 76 et des moyens élastiques 78. Cette seconde voie de transmission comprend également une autre poulie 80, également de préférence crantée, qui est montée fixement sur l'arbre mené 42. Un moyen de transmission de mouvement 82, comme une courroie de préférence crantée, permet de transmettre le mouvement de rotation de l'une des poulies vers l'autre des poulies.

Un accouplement 84, de préférence centrifuge, contrôlé par un accouplement monodirectionnel 86, comme une roue libre, est logé entre la poulie fixe 80 et la paire de disques coniques 54, 56 placée sur l'arbre mené 42.

De manière connue en soi, la roue libre 86 comprend une bague interne 88 reliée au fourreau 58, des rouleaux 90 (ou des billes) s'appuyant sur la bague interne et sur une bague externe 92 reliée à une virole axiale 94.

L'accouplement centrifuge 84 est placé entre la virole 94 et un tambour axial fixe 96 porté par la poulie fixe 80. A titre d'exemple, cet accouplement porte une multiplicité de bras radiaux 98 articulés sur la virole en des axes 100. Ces bras portent des patins de friction 102 soumis à l'action de ressorts de rappel 104 et permettent de réaliser un accouplement à friction entre ce tambour et cette virole sous l'effet centrifuge procuré par la rotation de la virole et/ou du tambour.

Les moyens de pression 28 et 72 des accouplements 22 et 70 décrits ci-dessus sont contrôlés sous l'action de moyens de commande respectivement 106, 108, comme des leviers pivotants soumis à l'action d'un vérin (non représentés).

Un calculateur 110 permet de contrôler les moyens de commande 106, 108 par l'intermédiaire de lignes de commande 112 pour mettre en action le type de fonctionnement du système d'entraînement. Ce calculateur permet aussi de contrôler le fonctionnement du moteur 10 et/ou de la machine électrique 14 par des lignes 114 et comprend des cartographies ou des tables de données permettant, principalement en fonction des besoins exprimés par le conducteur du véhicule, de mettre en marche, soit la machine électrique 14, soit le moteur 10, soit les deux.

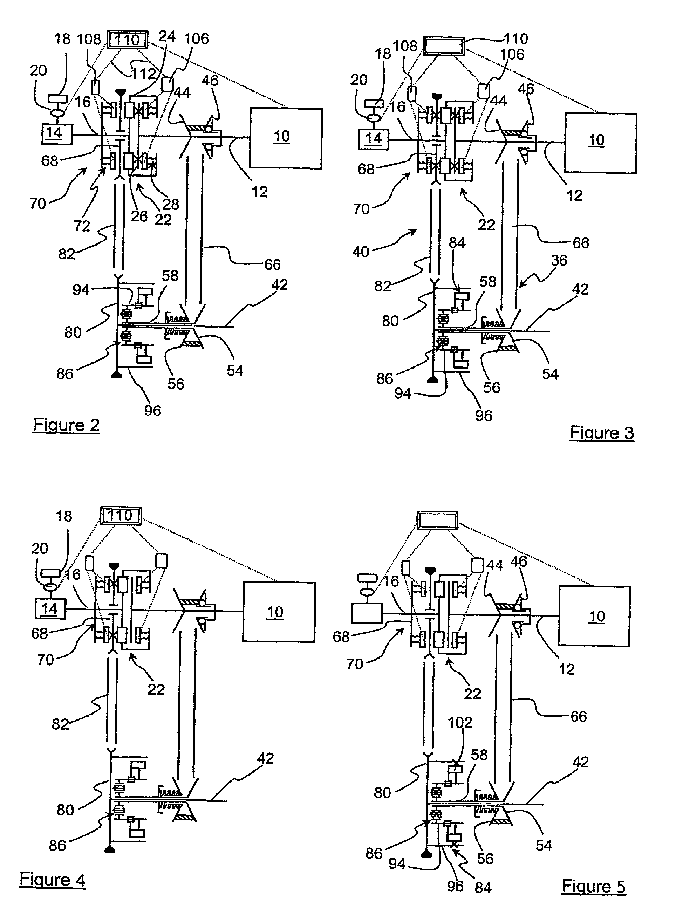

Le fonctionnement du système va être maintenant décrit en relation avec les différentes configurations illustrées sur les figures 2 à 14 et en se rapportant au tableau ci-dessous.

| Fig | Description | 70 | 22 | 86 | 84 | 40 | 36 | 14 | 10 | 42 |
|---|---|---|---|---|---|---|---|---|---|---|
| 2 | Démarrage moteur thermique : véhicule arrêté/charge batterie véhicule arrêté | 0 | 1 | 1 | 0 | 0 | 1 | 1 | 1 | 0 |
| 3 | Démarrage moteur thermique : véhicule roulant en marche avant en traction électrique | 1 | 1 | 1 | 0 | 1 | 1 | 1 | 1 | 1 |
| 4 | Traction électrique marche avant et marche arrière (mot. thermique tournant ou non) | 1 | 0 | 0/1 | 0 | 1 | 0/1 | 1 | 0/1 | 1 |
| 5 | Traction thermique sans charge batterie | 0 | 0 | 1 | 1 | 3 | 1 | 0 | 1 | 1 |
| 6 | Traction thermique avec charge batterie pour Nmach. élec. = Nmot. Th. (rapport court) | 0 | 1 | 1 | 1 | 3 | 1 | 1 | 1 | 1 |
| 7 | Traction thermique avec charge batterie pour Nmach. élec. = Nmot. Th. (rapport long) | 1 | 1 | 0 | 1 | 1 | 3 | 1 | 1 | 1 |
| 8 | Traction thermique avec charge batterie pour Nmach. élec. <> Nmot. Th. | 1 | 0 | 1 | 1 | 2 | 1 | 1 | 1 | 1 |
| | | | | | | | | | | |

| Fig | Description | 70 | 22 | 86 | 84 | 40 | 36 | 14 | 10 | 42 |
|---|---|---|---|---|---|---|---|---|---|---|
| 9 | Traction thermique + traction électrique pour Nmach. élec. = Nmot. Th. | 0 | 1 | 1 | 1 | 3 | 1 | 1 | 1 | 1 |
| 10 | Traction thermique + traction électrique Nmach. élec. = Nmot. Th. | 1 | 1 | 0 | 1 | 1 | 3 | 1 | 1 | 1 |
| 11 | Traction thermique + traction électrique pour Nmach. élec. <> Nmot. Th. | 1 | 0 | 1 | 1 | 1 | 1 | 1 | 1 | 1 |
| 12 | Récupération énergie freinage électrique | 1 | 0 | 0 | 0/1 | 2 | 0/3 | 1 | 0/1 | 1 |
| 13 | Récupération énergie freinage électrique + frein mot. thermique | 1 | 1 | 0 | 0/1 | 2 | 3 | 1 | 1 | 1 |
| 14 | Charge batterie par récupération énergie freinage électrique + énergie fournie par mot. thermique | 1 | 1 | 0 | 0/1 | 2 | 3 | 1 | 1 | 1 |

Dans ce tableau, les références 22, 70, 84 et 86 se rapportent aux différents accouplements déjà décrits, les références 36 et 40 aux voies de transmission, les références 10 et 14 respectivement au moteur thermique et à la machine électrique et la référence 42 à l'arbre mené. Les valeurs 0 ou 1 représentent l'état accouplé ou désaccouplé des accouplements 22, 70 et 84, l'état de roue libre ou de roue motrice pour l'accouplement unidirectionnel 86, l'état de transmission non motrice ou motrice des voies de transmission (avec une valeur supplémentaire 2 pour un état de transmission réceptrice dans le cas de frein moteur et une valeur de 3 pour un état de transmission en mouvement sans transmission de puissance), et l'état d'inactivité ou d'activité du moteur 10, de la machine électrique 14 et de l'arbre mené 42.

Il est prévu que l'accouplement unidirectionnel 86 est à l'état de roue motrice (valeur 1) lorsque la vitesse de rotation du fourreau 58 (Nf) est supérieure à la vitesse de rotation de la poulie fixe 80 (Np). De même, l'accouplement centrifuge 84 est en position actif lorsque l'accouplement unidirectionnel 86 est à l'état de roue motrice et que la vitesse de rotation du fourreau (Nf) est supérieure à une valeur seuil (Ne).

La figure 2 illustre le démarrage du moteur thermique lorsque le véhicule est à l'arrêt et que le calculateur 110 gère les moyens de commande 20 pour ne pas autoriser la charge des batteries 18. Dans cette configuration, le calculateur 110 contrôle par les lignes 112 les moyens de commande 106 et 108 des accouplements 22 et 70 de façon à ce que seuls les moyens de pression 28 de l'accouplement 22 soient actionnés. Par cela, le disque 26 est lié à rotation avec le carter 24 (symbolisé par deux traits inclinés entrecroisés sur la figure 2) et les moyens de pression 72 de l'accouplement 70 restent inactifs en laissant libre la poulie 68. De ce fait, l'arbre 12 du moteur 10 est relié directement au rotor 16 de la machine électrique 14. Le calculateur commande alors l'alimentation de cette machine électrique par les moyens 20 et les batteries 18 pour la commander en rotation. Ceci permet de faire fonctionner cette machine électrique comme un démarreur électrique en entraînant en rotation l'arbre 12 par le rotor 16 et en faisant démarrer le moteur thermique.

Pendant cette phase de démarrage, le mouvement de rotation de l'arbre 12 est transmis à la seconde paire de disques coniques 54, 56 via la première paire de disques 44, 46 et la courroie 66. Ce mouvement de rotation est ensuite transmis au fourreau 58 et à la roue libre 86 qui sera dans une configuration de roue motrice en assurant la liaison entre ce fourreau et la virole 94. Comme la vitesse de rotation au niveau de cette virole est inférieure à la valeur seuil Ne, l'accouplement centrifuge avec le tambour 96 n'est pas réalisé et la poulie fixe 80 reliée à ce tambour n'est pas entraînée en rotation. De ce fait, ni l'arbre mené 42, ni la courroie 82 n'est également entraîné en rotation.

Après le démarrage du moteur, le calculateur contrôle les moyens de commande 20 de la machine électrique 14 pour arrêter son alimentation de façon à ce que le rotor 16 soit entraîné par l'arbre 12, si les moyens de pression 28 restent actionnés. Sous l'effet de cette rotation, la machine 14 peut fonctionner en tant que génératrice d'énergie électrique et la puissance électrique qu'elle délivre est utilisée pour alimenter les batteries 18.

La figure 3 illustre maintenant la configuration selon laquelle il est prévu de démarrer le moteur thermique alors que le véhicule circule, de préférence en marche avant, sous l'impulsion de la machine électrique 14 qui fonctionne en tant que moteur électrique.

Pour cela, le calculateur 110 contrôle les moyens de commande 106, 108 de façon à ce que les accouplements 70 et 22 soient opérationnels et les moyens 20 pour alimenter la machine électrique par les batteries 18 pour l'entraîner en rotation. L'accouplement 22 permet ainsi de relier le rotor 16 de la machine électrique 14 à l'arbre 12 du moteur thermique. Sous l'impulsion de la rotation du rotor 16, l'arbre 12 est entraîné en rotation jusqu'au démarrage du moteur 10. Dés le démarrage de ce moteur, les deux accouplements 22 et 70 restent opérationnels et l'alimentation de la machine 14 est interrompue.

Durant la phase de démarrage et après celle-ci, la continuité du mouvement du véhicule est assurée par le fait que la seconde voie de transmission 40 reste constamment active. En effet, l'accouplement 70 permet de lier à rotation la poulie folle 68 avec le rotor 16 qui est, soit menant pour le démarrage du moteur, soit mené après cette phase de démarrage. Le mouvement de rotation de cette poulie est transmis par la courroie 82 à la poulie fixe 80 qui est reliée de manière fixe à l'arbre mené 42 en entraînant ce dernier en rotation.

Comme précédemment décrit en relation avec la figure 2, pendant la phase de démarrage et après cette phase, le mouvement de rotation de l'arbre 12 est transmis à la seconde paire de disques coniques 54, 56 via la première paire de disques 44, 46 et la courroie 66. Ce mouvement de rotation est ensuite transmis au fourreau 58 et à la roue libre 86 qui sera dans une configuration de roue motrice en assurant la liaison entre ce fourreau et la virole 94. L'accouplement centrifuge avec le tambour 96 n'est pas réalisé car la vitesse de rotation de la virole, qui correspond à celui de la poulie 80 (Np), est inférieure à la valeur seuil Ne, mais cela ne gène en rien la rotation de l'arbre mené entraîné par la poulie 80.

Une autre situation consiste, après le démarrage du moteur thermique, à relâcher l'accouplement 22 tout en maintenant la traction du véhicule par le moteur électrique. Le moteur thermique peut alors monter en régime jusqu'à ce que l'accouplement centrifuge 84 soit opérationnel. Le mouvement est alors transmis au véhicule par la première voie de transmission 36.

De même, après le démarrage du moteur 10, le calculateur contrôle les moyens de commande 20 de la machine électrique 14 pour qu'elle fonctionne en tant que génératrice d'énergie électrique entraînée par l'arbre 12 pour alimenter les batteries 18 ou les accessoires du véhicule, si nécessaire.

Ainsi, aussi bien dans la configuration de la figure 2 que celle de la figure 3, la machine électrique 14 est utilisée pour assurer le démarrage du moteur thermique, puis peut servir de génératrice d'énergie électrique pour alimenter les différents appareils et accessoires du véhicule et/ou recharger les batteries de ce véhicule.

Pour le fonctionnement du véhicule en traction électrique (en marche avant ou en marche arrière) comme illustré à la figure 4, la machine 14 fonctionne comme un moteur électrique en étant alimentée par les batteries 18 sous la commande des moyens 20. Pour ce fonctionnement, seul l'accouplement 70 est opérationnel sous le contrôle du calculateur 110 en permettant de relier la poulie 68 au rotor 16. Le mouvement de rotation de la poulie 68 est transmis par la courroie 82 à la poulie fixe 80 qui entraîne en rotation l'arbre mené 42 qui, à son tour, entraîne directement ou indirectement les roues du véhicule.

Etant donné que l'accouplement 22 n'est pas opérationnel, le moteur 10 peut être ou ne pas être en fonctionnement sans que cela n'apporte une perturbation dans l'entraînement du véhicule et sans que la roue libre 86 soit motrice.

La figure 5 illustre le fonctionnement du système avec un entraînement du véhicule par le moteur thermique 10.

Dans ce cas, aucun des deux accouplements 22 ou 70 n'est opérationnel et le fonctionnement du moteur thermique 10 fait tourner l'arbre 12.

Sous l'effet de cette rotation, la première paire de disques coniques 44, 46 est entraînée en rotation, rotation qui est transmise à la deuxième paire de disques 54, 56 et au fourreau 58 par la courroie 66. Comme la vitesse du fourreau est plus grande que celle de la poulie fixe 80 (poulie en position d'arrêt), la roue libre 86 est motrice en entraînant en rotation la virole 94. Sous l'effet de la vitesse de rotation et de la force centrifuge, les patins 102 de l'accouplement centrifuge 84 viennent en contact avec l'intérieur du tambour 96 en entraînant en rotation ce dernier et conséquemment l'arbre mené 42.

La rotation de la poulie fixe 80 n'a aucune répercussion sur le rotor 16 puisque l'accouplement 70 n'est pas actif et que la poulie 68 peut tourner librement sur ce rotor sous l'impulsion de la courroie 82.

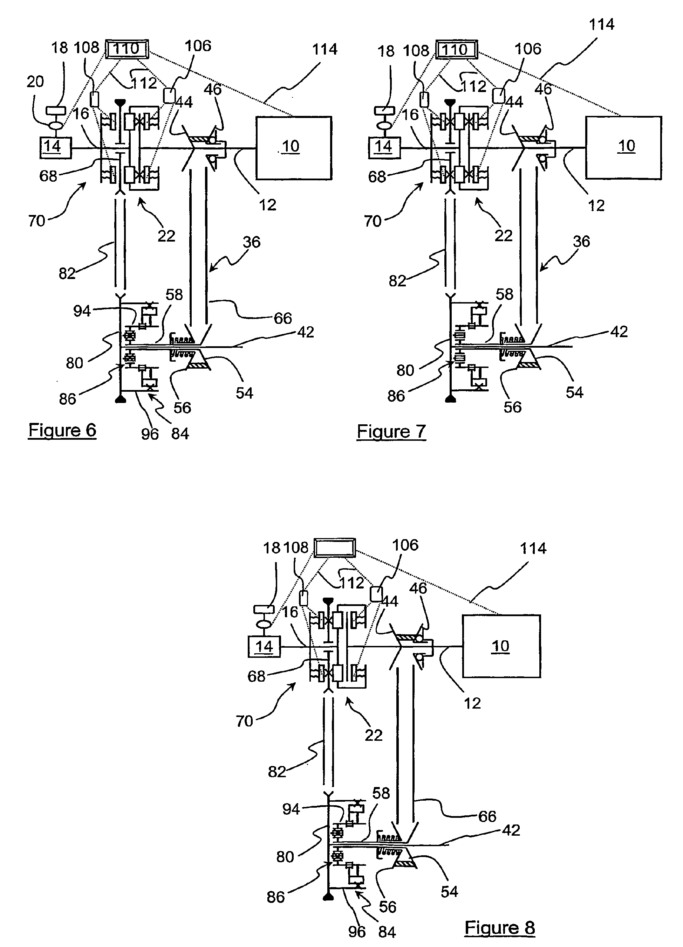

Les figures 6 à 8 illustrent le système dans une configuration pour laquelle le véhicule est entraîné par le moteur thermique 10 avec la charge des batteries 18 par l'intermédiaire de la machine électrique 14 qui fonctionne en tant que génératrice d'énergie électrique et cela lorsque le moteur entraîne cette machine à la même vitesse avec un rapport de transmission court (figure 6) ou long (figure 7), ou bien à des vitesses différentes (figure 8).

Dans le cas de la figure 6, le calculateur 110 contrôle le moteur 10 par la ligne 114 et les moyens de commande 106 et 108 par les lignes 112 de façon à ce que le moteur à combustion interne soit opérationnel et que l'accouplement 22 soit actif alors que l'accouplement 70 est dans une position inactive. Dans cette configuration, le moteur entraîne en rotation l'arbre 12 qui entraîne à son tour le rotor 16 à la même vitesse de rotation par l'intermédiaire de l'accouplement 22. La rotation du rotor permet d'assurer ainsi la charge des batteries 18 par l'intermédiaire de la machine électrique 14, qui fonctionne en tant que génératrice d'énergie électrique, sous le contrôle des moyens de commande 20.

Simultanément, le mouvement de rotation de l'arbre 12 est transmis par la par la première voie de transmission 36 (première paire de disques 44, 46, courroie 66, seconde paire de disques 54, 56) au fourreau 58. Comme la vitesse du fourreau 58 (Nf) est suffisante pour rendre motrice la roue libre 86, cette dernière entraîne en rotation la virole 94. Sous l'effet de cette rotation, l'accouplement 84 est opérationnel en solidarisant ainsi en rotation le tambour 96 et la poulie fixe 80 au fourreau 58. Dans cette position, comme le tambour est relié fixement à l'arbre mené 42, ce dernier est entraîné en rotation et par conséquent assure directement ou indirectement le déplacement du véhicule.

La rotation de la poulie fixe 80 n'a aucune répercussion sur le rotor 16 puisque l'accouplement 70 n'est pas actif et que la poulie 68 peut tourner librement sur ce rotor sous l'impulsion de la courroie 82.

La figure 7 illustre une autre configuration pour laquelle le véhicule est entraîné par le moteur thermique 10 avec la charge des batteries 18 par l'intermédiaire de la machine électrique 14, avec le moteur entraînant cette machine à la même vitesse par un rapport de transmission long.

Dans ce cas, le calculateur 110 contrôle le moteur 10 par la ligne 114 et les moyens de commande 106 et 108 par les lignes 112 de façon à ce que le moteur à combustion interne soit opérationnel et que les accouplements 22 et 70 soient actifs en solidarisant, d'une part, l'arbre 12 avec le rotor 16 et, d'autre part, le rotor 16 avec la poulie 68.

Ainsi, le moteur entraîne en rotation l'arbre 12 qui entraîne à son tour le rotor 16 à la même vitesse de rotation par l'intermédiaire de l'accouplement 22. La rotation du rotor permet d'assurer ainsi la charge des batteries 18 par l'intermédiaire de la machine électrique 14 qui fonctionne en tant que génératrice d'énergie électrique.

De plus, la rotation de ce rotor est transmise à l'arbre mené 42 par la seconde voie de transmission (poulie 68, courroie 82, poulie fixe 80) et permet ainsi d'entraîner en rotation cet arbre mené.

La rotation de l'arbre 12 est transmise, via la courroie 66, de la première paire de disques coniques 44, 46 à la deuxième paire de disques 54, 56 liée au fourreau 58 . Comme la vitesse de la poulie fixe 80 (Np) est plus grande que la vitesse du fourreau (Nf), la roue libre 86 n'est pas opérationnelle. De ce fait, aucune transmission de mouvement n'a lieu entre la voie de transmission 36 et l'arbre mené 42.

Dans le cas de la figure 8, le véhicule est entraîné par le moteur thermique 10 avec la charge des batteries 18 grâce à la machine électrique 14, avec une vitesse de rotation du moteur différente (plus petite ou plus grande) que celle de la machine 14.

Pour ce faire, le calculateur 110 contrôle le moteur 10 par la ligne 114 et les moyens de commande 106 et 108 par les lignes 112 de façon à ce que le moteur à combustion interne soit opérationnel et que l'accouplement 70 soit actif en solidarisant la poulie 68 avec le rotor 16 alors que l'accouplement 22 est inactif en désolidarisant ce rotor de l'arbre 12.

Le mouvement de rotation de l'arbre 12 est transmis par la première paire de disques coniques 44, 46 et la courroie 66 à la seconde paire de disques 54, 56 et au fourreau 58. La vitesse du fourreau 58 est telle que la roue libre 86 devient motrice et entraîne en rotation la virole 94. Sous l'effet de cette rotation, l'accouplement centrifuge 84 est opérationnel et permet de solidariser en rotation le tambour 96 et la poulie fixe 80 avec la virole et par conséquent avec le fourreau 58. Comme le tambour est relié fixement à l'arbre mené 42, ce dernier est entraîné en rotation et assure ainsi directement ou indirectement le déplacement du véhicule.

De plus, la poulie fixe 80 entraîne en rotation, par l'intermédiaire de la courroie 82, la poulie 68 qui a été rendue solidaire en rotation avec le rotor 16. Sous l'impulsion de la rotation de cette poulie 68, le rotor 16 est entraîné en rotation et permet d'assurer ainsi la charge des batteries 18 par l'intermédiaire de la machine électrique 14 qui fonctionne en tant que génératrice d'énergie électrique.

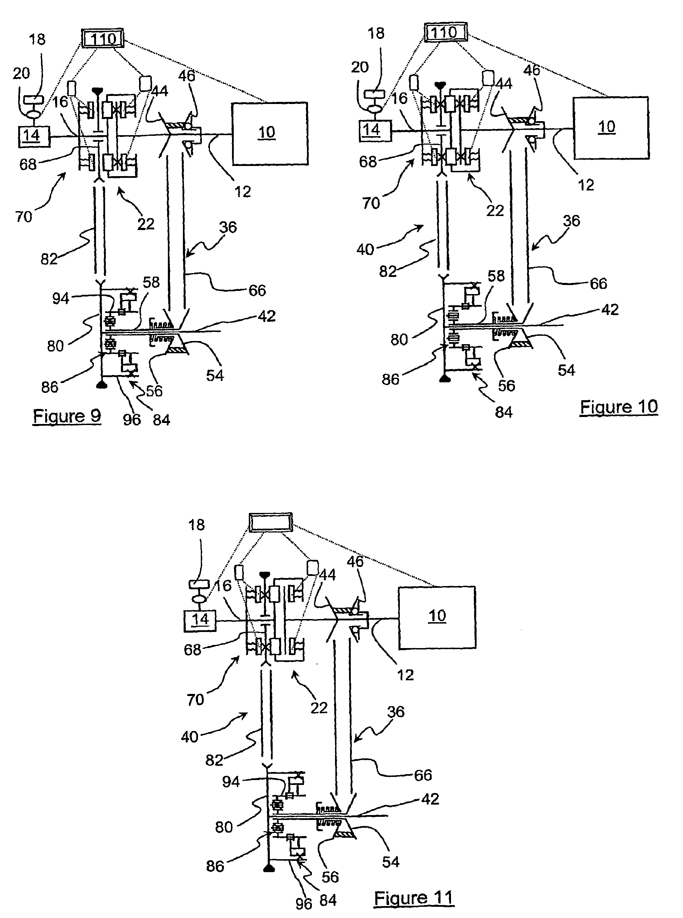

Les figures 9 à 11 illustrent maintenant le système d'entraînement du véhicule dans une configuration pour laquelle ce véhicule est entraîné conjointement par le moteur thermique 10 et par la machine électrique 14 et cela lorsque le moteur et la machine ont la même vitesse de rotation avec un rapport de transmission court (figure 9) ou long (figure 10), ou bien ont des vitesses de rotation différentes (figure 11).

Les configurations illustrées par les figures 9 à 11 ne différent de celles des figures 6 à 8 uniquement dans le fait que la machine 14 fonctionne en tant que moteur électrique pour assurer, conjointement avec le moteur thermique, le déplacement du véhicule.

Ainsi, dans la configuration de la figure 9 pour laquelle les positions des différents accouplements correspondent à celles de la figure 6, l'accouplement 22 est actif, l'accouplement 70 est inactif, la roue libre 86 est motrice, l'accouplement centrifuge 84 est également actif, le moteur 10 est opérationnel et la machine 14 fonctionne comme un moteur électrique alimenté par les batteries 18 et dont le fonctionnement est contrôlé par le calculateur 110 via les moyens de commandes 20.

De ce fait, la puissance du moteur électrique 14 est transmise du rotor 16 à l'arbre 12 du moteur thermique via l'accouplement 22. Cette puissance vient s'additionner à celle transmise à cet arbre par le moteur thermique et la puissance résultante est transférée par la première voie de transmission 36 (disques coniques 44 et 46, courroie 66, disques coniques 54 et 56) à l'arbre mené 42 via le fourreau 58, la roue libre 86, la virole 94, l'accouplement centrifuge 84, le tambour 96 et la poulie fixe 80 reliée à cet arbre mené.

Comme déjà décrit en relation avec la figure 6, la rotation de la poulie fixe 80 n'a aucune répercussion sur le rotor 16 car la poulie 68 peut tourner librement sur ce rotor sous l'impulsion de la courroie 82, l'accouplement 70 étant inactif.

Pour la configuration de la figure 10 (avec les positions des accouplements correspondant à celles de la figure 7), les accouplements 22 et 70 sont opérationnels, la roue libre 86 n'est pas motrice, l'accouplement centrifuge 84 est inactif, le moteur thermique est en fonctionnement et, comme pour la figure 9, la machine 14 fonctionne en tant que moteur électrique d'entraînement alimenté par les batteries 18 sous le contrôle du calculateur 110 via les moyens de commandes 20.

La puissance générée par le moteur thermique 10 est transmise à l'arbre 12 qui est, à son tour, transmise au rotor 16 par l'accouplement 22. Cette puissance est combinée avec celle du moteur électrique 14 au travers de son rotor 16. Comme l'accouplement 70 est actif, la combinaison de ces puissances est ensuite apportée à l'arbre mené 42 par la seconde voie de transmission 40 (poulie 68, courroie 82 et poulie fixe 80).

Etant donné que la roue libre 86 n'est pas motrice, d'une part, le mouvement de rotation de la poulie fixe 80 ne peut pas être transmis au fourreau 58 et, d'autre part, le mouvement de rotation de l'arbre 12 transféré par la première voie de transmission 36 au fourreau 58 ne peut être transmis à cette poulie fixe.

Selon la configuration de la figure 11 (correspondant à celle de la figure 8), l'accouplement 22 est inactif, l'accouplement 70 est opérationnel, la roue libre 86 est motrice, l'accouplement centrifuge 84 est actif, le moteur thermique 10 est en fonctionnement et la machine 14 fonctionne en tant que moteur électrique d'entraînement alimenté par les batteries 18.

Dans cette configuration, la puissance générée par le moteur électrique 14 est transmise du rotor 16 à l'arbre mené 42 par la seconde voie de transmission 40 (poulie 68, courroie 82 et poulie fixe 80), grâce à l'accouplement 70. Simultanément, la puissance du moteur thermique est transférée de l'arbre 12 à l'arbre mené 42 par la première voie de transmission 36 (disques coniques 44 et 46, courroie 66, disques coniques 54 et 56) en passant par la roue libre 86, la virole 94, l'accouplement centrifuge 84, le tambour 96 et poulie fixe 80), l'accouplement 22 étant inactif.

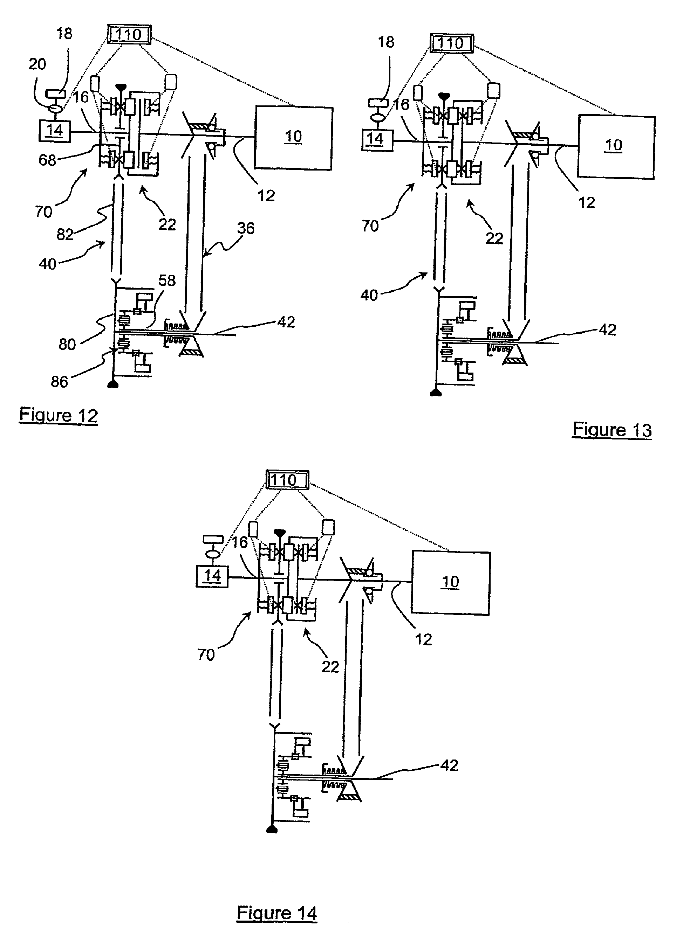

La configuration de la figure 12 illustre la situation du système en phase de récupération d'énergie électrique lorsque le véhicule est soumis à une décélération, comme lors du freinage de ce véhicule.

Pour cela et à partir d'une configuration où le véhicule est entraîné soit par le moteur thermique 10 soit par la machine électrique 14, soit par les deux 10 et 14, le calculateur 110 commande, lors des phases de décélération du véhicule, l'accouplement 70 en position actif et l'accouplement 22 en position inactif. Ce calculateur commande également le moteur thermique, s'il fonctionne, pour le mettre au ralenti ou le stopper. De ce fait, la vitesse de rotation de l'arbre 12 transmise au fourreau 58 par la première voie 36 n'est pas suffisante pour rendre motrice la roue libre 86.

Pour pouvoir récupérer cette énergie de décélération et la transformer en énergie électrique, le calculateur commande la machine 14 pour qu'elle fonctionne en tant que génératrice d'énergie électrique pour charger les batteries 18.

Ainsi, pendant les phases décélérations, les roues motrices du véhicule engendrent un mouvement de rotation qui est transmis directement ou indirectement à l'arbre mené 42. Ce mouvement de rotation est ensuite communiqué au rotor 16 par la seconde voie de transmission 40 via la poulie fixe 80, la courroie 82 et la poulie 68, l'accouplement 70 étant actif. La rotation du rotor 16 permet, sous le contrôle du calculateur et des moyens de commande 20, de faire fonctionner la machine 14 en tant que machine réceptrice d'énergie mécanique qui, comme pour un générateur électrique, sera transformé en énergie électrique pour être utilisée ou stockée dans les batteries 18.

Dans la configuration de la figure 13, il est prévu, en plus de la récupération d'énergie de la figure 12, de réaliser un frein moteur qui vient en complément du freinage du véhicule.

Pour cela, l'accouplement 22 est actif en plus de l'actionnement de l'accouplement 70 comme initialement indiqué sur la figure 12.

Ainsi, lors des périodes de décélération du véhicule, le mouvement de rotation de l'arbre mené 42 est transmis au rotor 16 via la seconde voie de transmission 40. L'accouplement 22 étant actif, ce mouvement de rotation est également transmis à l'arbre 12 qui génère un couple résistant sur le moteur thermique et par conséquent un frein moteur.

Il est à noter que, dans le cas où les batteries 18 sont complètement chargées, le calculateur 110 commande la machine 14 pour la rendre électriquement inactive. Ceci permet d'améliorer encore plus le frein moteur.

Pour la figure 14, la configuration est identique à celle de la figure 12 à la différence que le moteur thermique 10 fournit de l'énergie pour assurer la recharge des batteries 18.

Dans ce cas, l'énergie générée par la décélération du véhicule est transmise au rotor 16, comme décrit en relation avec la figure 12. Le calculateur 110 commande en plus le moteur 10 pour qu'il entraîne en rotation l'arbre 12. Le mouvement de rotation de cet arbre, et par conséquent son énergie, est transmis par l'accouplement 22 au rotor 16 qui bénéficie d'un surcroît d'énergie pour réaliser la charge des batteries via la machine 14 qui fonctionne en tant que générateur d'énergie électrique.

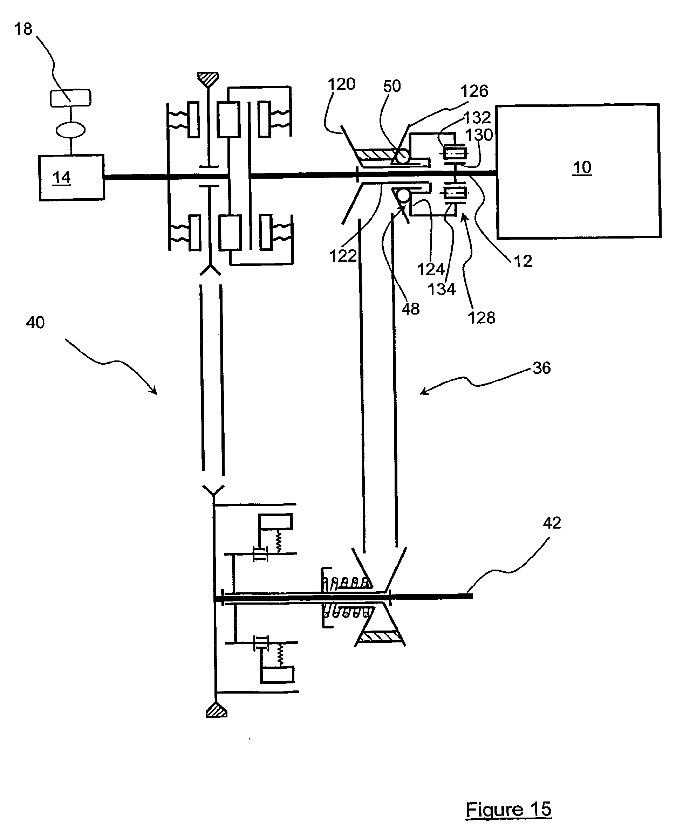

La figure 15 illustre maintenant une variante de la figure 1 selon laquelle la première paire de disques coniques porté par l'arbre 12 comporte une modification par rapport à celle de la figure 1 et selon laquelle l'accouplement unidirectionnel (la roue libre) a été changé d'emplacement par rapport à celui illustré sur cette figure 1. Ainsi le disque conique 120, qui était initialement fixe sur la figure 1 (disque conique 44), est porté fixement par une extrémité d'un tube 122 entourant l'arbre 12. Ce tube avec le disque conique 120 est libre en rotation mais fixe en translation le long de l'arbre 12. L'autre extrémité de ce tube porte également de manière fixe un flasque 124 qui a la même fonction que le flasque des moyens de commandes 48 décrit précédemment en relation avec la figure 1. Le disque conique mobile opposé 126 est monté entre le disque conique 120 et le flasque 124 en étant libre en translation mais fixe en rotation sur le tube 122. Le déplacement axial de ce disque mobile en direction du disque conique 120 est contrôlé par les moyens de commande 48, comme des masselottes 50 qui prennent appui sur le flasque 124 et sur l'extérieur du disque conique 126.

Comme illustré sur la figure 15, le tube 122 est relié à l'arbre 12 par un accouplement unidirectionnel, comme une roue libre 128. Cette roue libre comprend une bague interne 130 reliée à l'arbre 12, des rouleaux 132 s'appuyant sur la bague interne et sur une bague externe 134 reliée au tube 122 par le flasque 124.

Le fonctionnement de cette variante est globalement identique à celui décrit en relation avec les figures 2 à 14. Il est à noter cependant que, pendant les phases de décélération du véhicule, la première voie de transmission 36 est entraînée par l'arbre mené 42 alors que cela ne se produisait pas dans les configurations décrites précédemment en relation avec la récupération d'énergie.

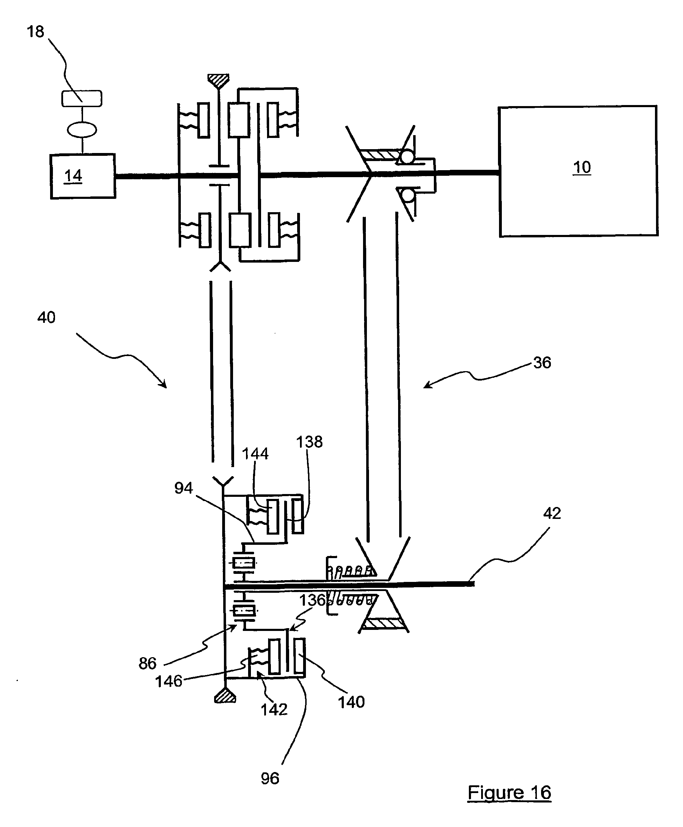

Dans la variante de la figure 16, l'accouplement centrifuge de la figure 1 entre le tambour 96 et la roue libre 86 a été remplacé par un accouplement débrayable 136.

Pour cela, la virole 94 porte un disque d'accouplement 138 fixe en rotation avec cette virole et de préférence libre en translation axiale sur cette virole. Le tambour porte, de manière fixe, un plateau de réaction 140 et des moyens de pression 142 portés également par le tambour et permettant d'assurer l'accouplement entre le disque 138 et ce plateau 140. Ces moyens de pression comportent, à titre d'exemple, un plateau d'appui 144 soumis à l'action de moyens à ressort 146.

Comme déjà mentionné en relation avec les accouplements débrayables de la figure 1, l'accouplement débrayable 136, et plus particulièrement ses moyens de pression 142, est contrôlé par des moyens de commande (non représentés).

Le fonctionnement de cette variante est également identique à celui de la figure 1 mais avec l'avantage de pouvoir contrôler le régime d'embrayage et de débrayage de l'accouplement 136.

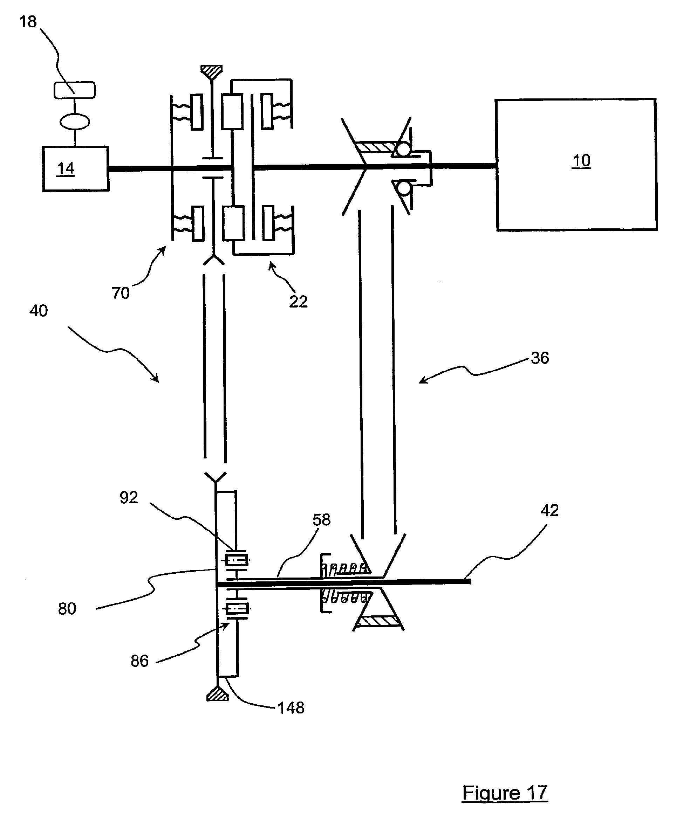

Pour la variante de la figure 17, l'accouplement (centrifuge ou débrayable) prévu initialement entre la poulie fixe 80 et la roue libre 86 a été supprimé.

La roue libre est donc reliée directement à la poulie fixe par un anneau plat 148 liant fixement sa bague externe 92 avec la poulie 80.

Cette disposition est particulièrement avantageuse lorsque l'on souhaite garder systématiquement le moteur thermique 10 arrêté lorsque le véhicule est à l'arrêt. Pour mouvoir le véhicule de sa position d'arrêt, la machine 14 est utilisée en tant que moteur électrique d'entraînement. Cette machine 14 peut être aussi utilisée en tant que démarreur du moteur thermique 10 en rendant opérationnel l'accouplement 22. Une fois que le moteur thermique a démarré, sa puissance est transmise à la poulie fixe 80 via la première voie d'entraînement 36 ou par le fourreau 58 et la roue libre 86 (les accouplements 22 et 70 étant inactifs).

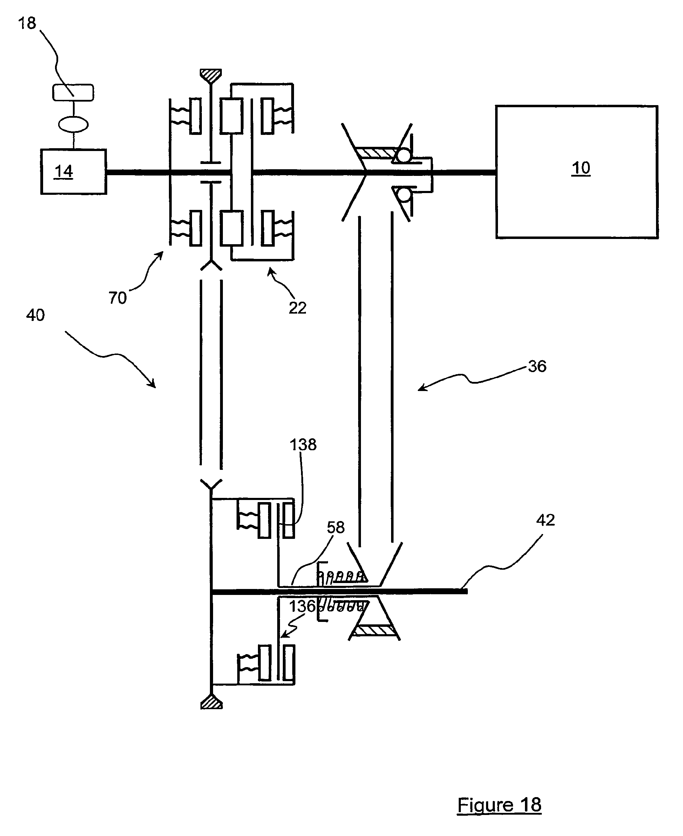

Dans la variante de la figure 18, qui est plus précisément une variante de la figure 16, la virole et la roue libre initialement prévues entre le disque d'accouplement 138 de l'accouplement débrayable 136 et le fourreau 58 sont omises.

De ce fait, le disque 138 est monté fixement en rotation et préférentiellement libre en translation sur le fourreau 58.

Cette configuration a pour avantage d'apporter un chemin supplémentaire pour la récupération d'énergie lors des phases de décélération du véhicule. De plus, la voie de transmission 36 peut permettre de réaliser un frein moteur sur le moteur thermique dans une fourchette de régimes plus étendue.

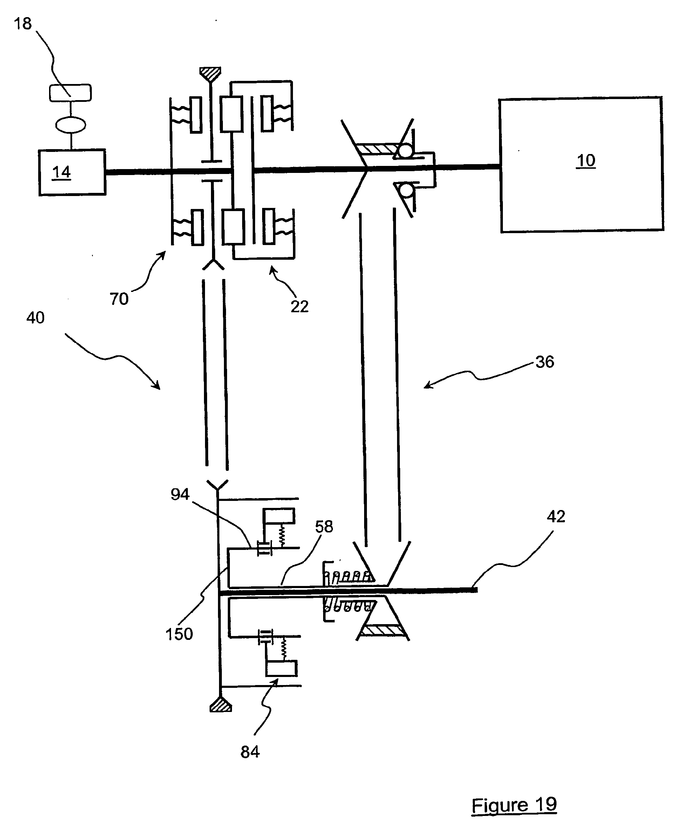

Pour la figure 19, il est prévu de supprimer la roue libre prévue entre l'accouplement centrifuge 84 et le fourreau 58.

La virole 94 portant l'accouplement 84 est donc reliée fixement directement au fourreau 58 par un flanc 150.

Cette configuration permet d'utiliser la première voie de transmission 36 comme frein moteur pour le moteur thermique 10 et/ou le moteur électrique 14.

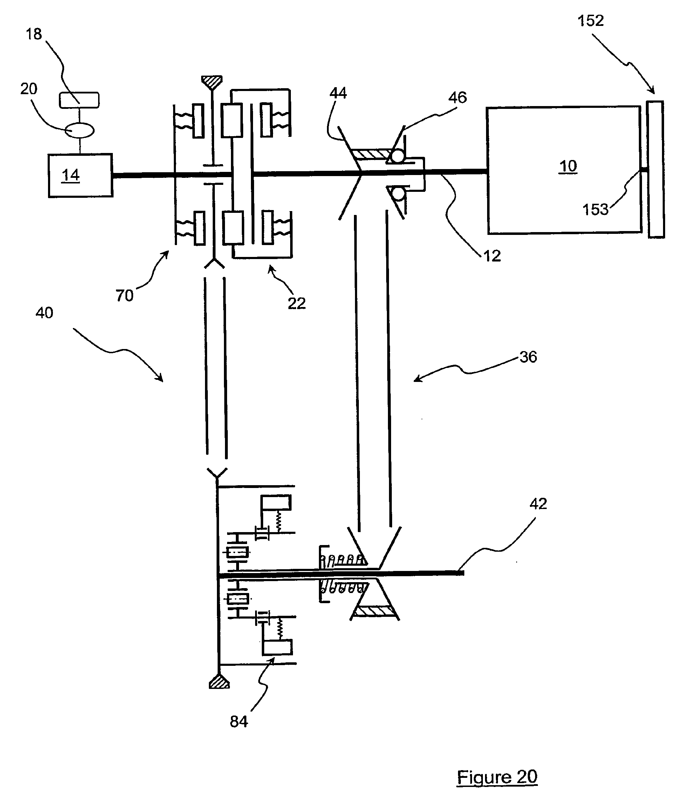

Pour la variante de la figure 20, une machine électrique 152, utilisée principalement comme générateur d'énergie électrique, est placée sur l'arbre du moteur thermique 10. Ce placement est réalisé, soit sur une portion de l'arbre 12 entre la paire de poulies coniques 44, 46 de la voie d'entraînement 36 et le moteur, soit sur un prolongement d'arbre 153 opposé à l'arbre 12, comme illustré sur cette figure.

Ce générateur pourra être relié aux moyens de commande 20 ou comporter des moyens de commande spécifiques (non représentés) contrôlés par le calculateur de manière à assurer la charge des batteries, l'entraînement du véhicule seul ou en association avec le moteur thermique, ou le démarrage de ce moteur thermique.

Ceci permet d'obtenir un fonctionnement, dit hybride série, si le régime du moteur thermique 10 ne permet pas de rendre opérationnel l'accouplement 84.

Cette configuration permet en outre de ne pas être limitée en durée d'utilisation continue du véhicule en marche arrière, puisque le moteur thermique 10 peut permettre de charger les batteries 18, alors que simultanément, ces batteries fournissent l'énergie à la machine électrique 14 pour effectuer cette marche arrière.

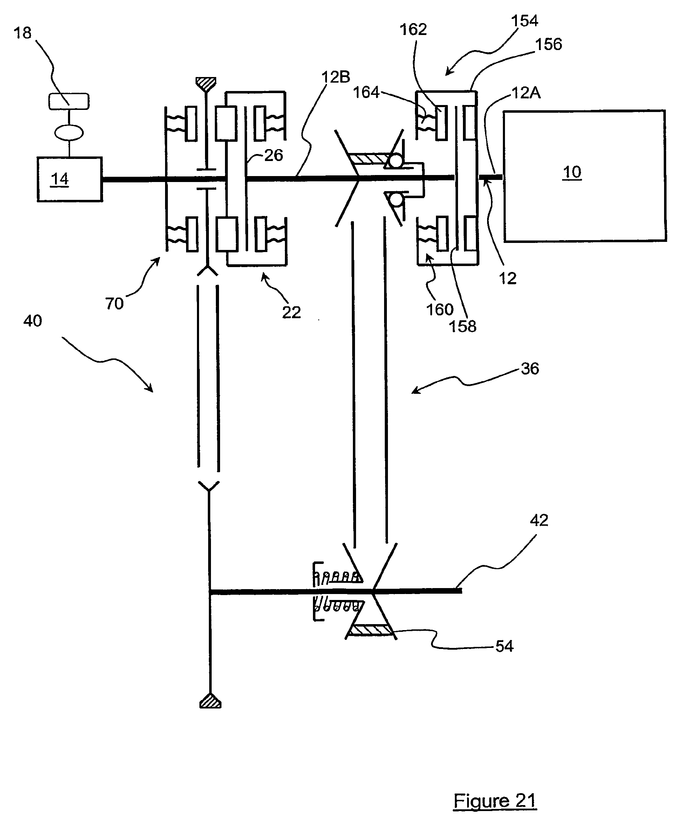

Sur l'exemple de la variante illustrée sur la figure 21, un accouplement additionnel débrayable 154 est placé sur l'arbre 12 entre la voie de transmission de mouvement 36 et le moteur 10 en partageant ainsi cet arbre en deux parties, une première partie 12A entre le moteur et cet accouplement et une deuxième partie 12B entre cet accouplement et l'accouplement 22. De plus, la roue libre au niveau de l'arbre mené 42, l'accouplement centrifuge, la virole et le tambour ont été supprimés alors que le disque conique 54 a été rendu solidaire en rotation et en translation avec l'arbre mené 42.

L'accouplement additionnel comprend un carter 156 porté, de manière fixe en rotation et en translation, par l'extrémité libre de la première partie 12A de l'arbre, et un disque d'accouplement 158 logé dans le carter en étant porté, de manière fixe en rotation et libre en translation axiale, par une extrémité de la deuxième partie 12B de l'arbre, l'autre extrémité de cet arbre portant le disque d'accouplement 26 de l'accouplement 22, comme déjà décrit en relation avec la figure 1. Cet accouplement additionnel comporte également des moyens de pression 160 (plateau de pression 162 et moyens élastiques 164), logés dans le carter 156, qui permettent d'assurer l'accouplement entre le disque 158 et le carter 156 pour autoriser la rotation simultanée des deux parties 12A et 12B de l'arbre 12.

Ceci a pour avantage de pouvoir neutraliser la voie de transmission 36 en débrayant l'accouplement 154 ou de mettre en place, entre la partie 12B de l'arbre 12 et l'arbre mené 42, tout autre moyen de variation de vitesse, comme un moyen de variation discontinu, tel qu'une boîte de vitesse. Ainsi, les passages (manuels ou automatiques) de ces vitesses se feront classiquement en débrayant l'accouplement 154.

Comme pour les autres variantes, le fonctionnement des variantes des figures 17 à 20 est globalement semblable à celui du système de la figure 1

La présente invention n'est pas limitée à l'exemple décrit ci-dessus mais englobe toutes variantes ou équivalents.

De même, le moteur thermique mentionné dans la description ci-dessus couvre aussi bien les moteurs à combustion interne fonctionnant avec des carburants fossiles, comme l'essence, le diesel ou le gaz qu'avec des biocarburants de type éthanol ou autres.

## Revendications

1. Système d'entraînement en déplacement pour véhicule hybride comprenant un moteur thermique (10), notamment à combustion interne, avec un arbre (12), au moins une machine électrique (14) avec un rotor (16) alimentée par des batteries (18), un accouplement débrayable (22) entre ledit arbre et ledit rotor, un arbre mené (42) entraînant les roues du véhicule, une première voie de transmission de mouvement (36) entre l'arbre (12) du moteur thermique (10) et l'arbre mené (42) et une seconde voie de transmission de mouvement (40) entre le rotor (16) de la machine (14) et ledit arbre mené, **caractérisé en ce qu'**il comprend un accouplement centrifuge (84) entre l'arbre mené (42) et la première voie de transmission (36).

2. Système d'entraînement selon la revendication 1, **caractérisé en ce que** au moins une des voies comprend une transmission de rapport variable (36).

3. Système d'entraînement selon la revendication 2, **caractérisé en ce que** la transmission comprend une transmission de rapport continûment variable.

4. Système d'entraînement selon la revendication 3, **caractérisé en ce que** la transmission de rapport continûment variable comprend deux paires de poulies à écartement variable (44, 46 ; 54, 56) reliées par une courroie (66).

5. Système d'entraînement selon la revendication 2, **caractérisé en ce que** la transmission de rapport variable comprend une boîte de vitesse.

6. Système d'entraînement selon la revendication 1, **caractérisé en ce que** au moins une des voies comprend une transmission de rapport fixe (40).

7. Système d'entraînement selon la revendication 6, **caractérisé en ce que** la transmission de rapport fixe (40) comprend deux poulies (68, 80) reliées par une courroie (82).

8. Système d'entraînement selon l'une des revendications 1 à 7, **caractérisé en ce qu'**il comprend un accouplement débrayable (70) entre le rotor (16) de la machine électrique (14) et la seconde voie de transmission.

9. Système d'entraînement selon l'une des revendications 1 à 8, **caractérisé en ce qu'**il comprend un accouplement (128, 154) entre la première voie de transmission (36) et l'arbre (12) du moteur (10).

10. Système d'entraînement selon la revendication 1 ou 9, **caractérisé en ce que** l'accouplement comprend un accouplement unidirectionnel (86, 128).

11. Système d'entraînement selon la revendication 1 ou 9, **caractérisé en ce que** l'accouplement comprend un accouplement débrayable (136, 156).

12. Système d'entraînement selon la revendication 1, **caractérisé en ce qu'**il comprend une machine électrique additionnelle (152) entraînée par le moteur (10).

13. Procédé pour l'entraînement en déplacement d'un véhicule hybride comprenant un moteur thermique (10), notamment à combustion interne, avec un arbre (12), au moins une machine électrique (14) avec un rotor (16) alimentée par des batteries (18), un accouplement débrayable (22) entre ledit arbre et ledit rotor, et un arbre mené (42) entraînant les roues du véhicule, procédé selon lequel l'arbre mené (42) est relié par une première voie de transmission de mouvement (36) avec l'arbre (12) du moteur thermique (10) et /ou par une seconde voie de transmission de mouvement (40) avec le rotor (16) de la machine électrique (14), **caractérisé en ce qu'**il consiste à réaliser l'entraînement de l'arbre mené par un accouplement centrifuge (84) entre ledit arbre et la première voie de transmission.

14. Procédé pour l'entraînement en déplacement d'un véhicule hybride selon la revendication 13, **caractérisé en ce qu'**il consiste, pour réaliser le démarrage du moteur thermique (10), à alimenter la machine électrique (14) par les batteries (18) pour la faire fonctionner comme un démarreur électrique et à relier le rotor (16) de cette machine avec l'arbre (14) du moteur (10) par l'accouplement (22).

15. Procédé pour l'entraînement en déplacement d'un véhicule hybride selon la revendication 13, **caractérisé en ce qu'**il consiste, conjointement au fonctionnement du moteur thermique (10) et à l'entraînement de l'arbre mené (42) par la première voie de transmission (36), à réaliser la charge des batteries (18) grâce à la mise en action de la machine électrique par l'accouplement (22) entre l'arbre (12) du moteur et le rotor (16) de la machine.

16. Procédé pour l'entraînement en déplacement d'un véhicule hybride selon la revendication 13, **caractérisé en ce qu'**il consiste, conjointement au fonctionnement du moteur thermique (10) et à l'entraînement de l'arbre mené (42) par la première voie de transmission (36), à entraîner ledit arbre mené par la machine électrique (14) en reliant son rotor (16) à l'arbre (12) du moteur (10).

17. Procédé pour l'entraînement en déplacement d'un véhicule hybride selon la revendication 13, **caractérisé en ce qu'**il consiste, conjointement au fonctionnement du moteur thermique (10) et à l'entraînement de l'arbre mené (42) par la première voie de transmission (36), à entraîner ledit arbre mené par la machine électrique (14) grâce à la seconde voie de transmission (40).

18. Procédé pour l'entraînement en déplacement d'un véhicule hybride selon la revendication 13, **caractérisé en ce qu'**il consiste, conjointement au fonctionnement du moteur thermique (10) et à l'entraînement de l'arbre mené (42) par la deuxième voie de transmission (40), à entraîner ledit arbre mené par le moteur thermique (10) en reliant son arbre (12) au rotor (16) par l'accouplement (70).

19. Procédé pour l'entraînement en déplacement d'un véhicule hybride selon la revendication 13, **caractérisé en ce qu'**il consiste, lors des phases de décélération du véhicule, à récupérer l'énergie mécanique de l'arbre mené (42) pour la transmettre au rotor (16) de la machine électrique (14) en reliant ledit rotor à la deuxième voie de transmission (40) par l'accouplement (70).

20. Procédé pour l'entraînement en déplacement d'un véhicule hybride selon la revendication 13, **caractérisé en ce qu'**il consiste, lors des phases de décélération du véhicule, à récupérer l'énergie mécanique de l'arbre mené (42) pour la transmettre au rotor (16) de la machine électrique (14) en reliant ledit rotor à la deuxième voie de transmission (40) par l'accouplement (70) et pour la transmettre à l'arbre (12) du moteur (10) en rendant opérationnel l'accouplement (22) entre le rotor et l'arbre.

## Claims

1. A travel drive system for a hybrid vehicle comprising a thermal engine (10). notably an internal-combustion engine, with a shaft (12), at least one electric machine (14) with a rotor (16) powered by batteries (18), a disengageable coupling (22) between said shaft and said rotor, a driven shaft (42) driving the wheels of the vehicle, a first motion transmission path (36) between shaft (12) of thermal engine (10) and driven shaft (42) and a second motion transmission path (40) between rotor (16) of machine (14) and said driven shaft, **characterized in that** it comprises a centrifugal coupling (84) between driven shaft (42) and first transmission path (36).

2. A drive system as claimed in claim 1, **characterized in that** at least one of the paths comprises a variable gear transmission (36).

3. A drive system as claimed in claim 2, **characterized in that** the transmission comprises a continuously variable gear transmission.

4. A drive system as claimed in claim 3, **characterized in that** the continuously variable gear transmission comprises two pairs of variable spacing pulleys (44, 46 ; 54, 56) connected by a belt (66).

5. A drive system as claimed in claim 2, **characterized in that** the variable gear transmission comprises a gear box.

6. A drive system as claimed in claim 1, **characterized in that** at least one of the paths comprises a fixed gear transmission (40).

7. A drive system as claimed in claim 6, **characterized in that** fixed gear transmission (40) comprises two pulleys (68, 80) connected by a belt (82).

8. A drive system as claimed in any one of claims 1 to 7, **characterized in that** it comprises a disengageable coupling (70) between rotor (16) of electric machine (14) and the second transmission path.

9. A drive system as claimed in ony one of claims 1 to 8, **characterized in that** it comprises a coupling (128, 154) between first transmission path (36) and shaft (12) of engine (10).

10. A drive system as claimed in claim 9 or 10, **characterized in that** the coupling comprises a one-directional coupling (86, 128),

11. A drive system as claimed in claim 9 or 10, **characterized in that** the coupling comprises a disengageable coupling (136, 156).

12. A drive system as claimed in claim 1, **characterized in that** it comprises an additional electric machine (152) driven by engine (10).

13. A method for travel drive of a hybrid vehicle comprising a thermal engine (10), notably an internal-combustion engine, with a shaft (12), at least one electric machine (14) with a rotor (16) powered by batteries (18), a disengageable coupling (22) between said shaft and said rotor, and a driven shaft (42) driving the wheels of the vehicle, a method wherein driven shaft (42) is connected by a first motion transmission path (36) to rotor (12) of thermal engine (10) and/or by a second motion transmission path (40) to rotor (16) of electric machine (14), **characterized in that** it consists in driving the driven shaft by means of a centrifugal coupling (84) between said shaft and the first transmission path.

14. A method for travel drive of a hybrid vehicle as claimed in claim 13, **characterized in that** it consists, for starting thermal engine (10), in powering electric machine (14) by means of batteries (18) so as to operate it as an electric starter and in connecting rotor (16) of this machine to shaft (12) of engine (10) through coupling (22).

15. A method for travel drive of a hybrid vehicle as claimed in claim 13, **characterized in that** it consists, jointly with the operation of thermal engine (10) and drive of driven shaft (42) by first transmission path (36), in charging batteries (18) through actuation of the electric machine via coupling (22) between shaft (12) of the engine and rotor (16) of the machine.

16. A method for travel drive of a hybrid vehicle as claimed in claim 13, **characterized in that** it consists, jointly with the operation of thermal engine (10) and drive of driven shaft (42) by first transmission path (36), in driving said driven shaft through electric machine (14) by connecting its rotor (16) to shaft (12) of engine (10).

17. A method for travel drive of a hybrid vehicle as claimed in claim 13, **characterized in that** it consists, jointly with the operation of thermal engine (10) and drive of driven shaft (42) by first transmission path (36), in driving said driven shaft through electric machine (14) by means of second transmission path (40).

18. A method for travel drive of a hybrid vehicle as claimed in claim 13, **characterized in that** it consists, jointly with the operation of thermal engine (10) and drive of driven shaft (42) by second transmission path (40), in driving said driven shaft through thermal engine (10) by connecting its shaft (12) to rotor (16) through coupling (70).

19. A method for travel drive of a hybrid vehicle as claimed in claim 13, **characterized in that** it consists, during deceleration phases of the vehicle, in recovering the mechanical energy of driven shaft (42) in order to transmit it to rotor (16) of electric machine (14) by connecting said rotor to second transmission path (40) through coupling (70).

20. A method for travel drive of a hybrid vehicle as claimed in claim 13, **characterized in that** it consists, during deceleration phases of the vehicle, in recovering the mechanical energy of driven shaft (42) in order to transmit it to rotor (16) of electric machine (14) by connecting said rotor to second transmission path (40) through coupling (70) and to transmit it to shaft (12) of engine (10) by making coupling (22) between the rotor and the shaft operational.

## Patentansprüche

1. Fahrantriebsystem für Hybridfahrzeug, das einen Verbrennungsmotor (10) aufweist, insbesondere eine Wärmekraftmaschine, mit einer Welle (12), mindestens einer Elektromaschine (14) mit einem Rotor (16), die von Batterien (18) versorgt wird, einer ausrückbaren Kupplung (22) zwischen der Welle und dem Rotor, einer Abtriebswelle (42), die die Räder des Fahrzeugs antreibt, einem ersten Bewegungsübertragungsweg (36) zwischen der Welle (12) des Verbrennungsmotors (10) und der Abtriebswelle (42) und einem zweiten Bewegungsübertragungsweg (40) zwischen dem Rotor (16) der Maschine (14) und der Abtriebswelle, **dadurch gekennzeichnet, dass** es eine Flienkraftkupplung (84) zwischen der Abtriebswelle (42) und dem ersten Bewegungsübertragungsweg (36) aufweist.

2. Antriebssystem nach Anspruch 1, **dadurch gekennzeichnet, dass** wenigstens einer der Wege eine Übertragung mit einstellbarem Verhältnis (36) aufweist.

3. Antriebssystem nach Anspruch 2, **dadurch gekennzeichnet, dass** die Übertragung eine Übertragung mit stufenlos veränderlichem Verhältnis aufweist.

4. Antriebssystem nach Anspruch 3, **dadurch gekennzeichnet, dass** die Übertragung mit stufenlos veränderlichem Verhältnis zwei Paare Scheiben mit veränderlicher Beabstandung (44, 46; 54, 56), die durch einen Riemen (66) verbunden sind, aufweist.

5. Antriebssystem nach Anspruch 2, **dadurch gekennzeichnet, dass** die Übertragung mit veränderlichem Verhältnis ein Schaltgetriebe aufweist.

6. Antriebssystem nach Anspruch 1, **dadurch gekennzeichnet, dass** mindestens einer der Wege eine Übertragung mit unveränderlichem Verhältnis (40) aufweist.

7. Antriebssystem nach Anspruch 6, **dadurch gekennzeichnet, dass** die Übertragung mit unveränderlichem Verhältnis (40) zwei Scheiben (68, 80) aufweist, die durch einen Riemen (82) verbunden sind.

8. Antriebssystem nach einem der Ansprüche 1 bis 7, **dadurch gekennzeichnet, dass** es eine ausrückbare Kupplung (70) zwischen dem Rotor (16) der Elektromaschine (14) und dem zweiten Übertragungsweg aufweist.

9. Antriebssystem nach einem der Ansprüche 1 bis 8, **dadurch gekennzeichnet, dass** es eine Kupplung (128, 154) zwischen dem ersten Antriebsweg (36) und der Welle (12) des Motors (10) aufweist.

10. Antriebssystem nach Anspruch 1 oder 9, **dadurch gekennzeichnet, dass** die Kupplung eine Einwegkupplung (86, 128) aufweist.

11. Antriebssystem nach Anspruch 1 oder 9, **dadurch gekennzeichnet, dass** die Kupplung eine ausrückbare Kupplung (86, 128) aufweist.

12. Antriebssystem nach Anspruch 1, **dadurch gekennzeichnet, dass** es eine zusätzliche Elektromaschine (152), die von dem Motor (10) angetrieben wird, aufweist.

13. Verfahren für den Fahrantrieb eines Hybridfahrzeugs, das einen Verbrennungsmotor (10) aufweist, insbesondere eine Wärmekraftmaschine, mit einer Welle (12), mindestens eine Elektromaschine (14) mit einem Rotor (16), die von Batterien (18) versorgt wird, einer auskuppelbaren Kupplung (22) zwischen der Welle und dem Rotor und einer Abtriebswelle (42), die die Räder des Fahrzeugs antreibt, Verfahren gemäß dem die Abtriebswelle (42) durch einen ersten Bewegungsübertragungsweg (36) mit der Welle (12) des Verbrennungsmotors (10) verbunden ist und/oder durch einen zweiten Bewegungsübertragungsweg (40) mit dem Rotor (16) der Elektromaschine (14), **dadurch gekennzeichnet, dass** es darin besteht, den Antrieb der Abtriebswelle durch eine Fliehkraftkupplung (84) zwischen der Welle und dem ersten Bewegungsübertragungsweg herzustellen.

14. Verfahren für den Fahrantrieb eines Hybridfahrzeugs nach Anspruch 13, **dadurch gekennzeichnet, dass** es darin besteht, zum Herstellen des Startens des Verbrennungsmotors (10) die Elektromaschine (14) über die Batterien (18) zu versorgen, um sie als einen elektrischen Starter funktionieren zu lassen, und den Rotor (16) dieser Maschine mit der Welle (14) des Motors (10) über die Kupplung (22) zu verbinden.

15. Verfahren für den Fahrantrieb eines Hybridfahrzeugs nach Anspruch 13, **dadurch gekennzeichnet, dass** es darin besteht, gemeinsam mit dem Funktionieren des Verbrennungsmotors (10) und dem Antrieb der Abtriebswelle (42) durch den ersten Übertragungsweg (36) die Ladung der Batterien (18) dank des Betätigens der Elektromaschine über die Kupplung (22) zwischen der Welle (12) des Motors und dem Rotor (16) der Maschine auszuführen.

16. Verfahren für den Fahrantrieb eines Hybridfahrzeugs nach Anspruch 13, **dadurch gekennzeichnet, dass** es darin besteht, gemeinsam mit dem Funktionieren des Verbrennungsmotors (10) und dem Antrieb der Abtriebswelle (42) durch den ersten Übertragungsweg (36) die Abtriebswelle durch die Elektromaschine (14) anzutreiben, indem ihr Rotor (16) mit der Welle (12) des Motors (10) verbunden wird.

17. Verfahren für den Fahrantrieb eines Hybridfahrzeugs nach Anspruch 13, **dadurch gekennzeichnet, dass** es darin besteht, gemeinsam mit dem Funktionieren des Verbrennungsmotors (10) und dem Antrieb der Abtriebswelle (42) durch den ersten Übertragungsweg (36) die Abtriebswelle durch die Elektromaschine (14) dank des zweiten Übertragungswegs (40) anzutreiben.

18. Verfahren für den Fahrantrieb eines Hybridfahrzeugs nach Anspruch 13, **dadurch gekennzeichnet, dass** es darin besteht, gemeinsam mit dem Funktionieren des Verbrennungsmotors (10) und dem Antrieb der Abtriebswelle (42) durch den zweiten Übertragungsweg (40) die Abtriebswelle durch den Verbrennungsmotor (10) anzutreiben, indem seine Welle (12) mit dem Rotor (16) durch die Kupplung (70) verbunden wird.

19. Verfahren für den Fahrantrieb eines Hybridfahrzeugs nach Anspruch 13, **dadurch gekennzeichnet, dass** es darin besteht, bei den Bremsphasen des Fahrzeugs die mechanische Energie der Abtriebswelle (42) zurückzugewinnen, um sie an den Rotor (16) der Elektromaschine (14) zu übertragen, indem der Rotor mit dem zweiten Übertragungsweg (40) durch die Kupplung (70) verbunden wird.

20. Verfahren für den Fahrantrieb eines Hybridfahrzeugs nach Anspruch 13, **dadurch gekennzeichnet, dass** es darin besteht, bei den Bremsphasen des Fahrzeugs die mechanische Energie der Abtriebswelle (42) zurückzugewinnen, um sie an den Rotor (16) der Elektromaschine (14) zu übertragen, indem der Rotor mit dem zweiten Übertragungsweg (40) durch die Kupplung (70) verbunden wird und um sie an die Welle (12) des Motors (10) zu übertragen, indem die Kupplung (22) zwischen dem Rotor und der Welle in Betrieb genommen wird.
